# EUROPÄISCHE PATENTSCHRIFT

(11) **EP 1 383 940 B1**
(45) Veröffentlichungstag und Bekanntmachung des Hinweises auf die Patenterteilung: **23.03.2005**
(21) Anmeldenummer: 02740265.0
(22) Anmeldetag: 19.04.2002
(51) Int. Cl.: C23C 24/08, C23C 30/00, C03C 17/00, C04B 41/87

(54) **FUNKTIONELLE KERAMISCHE SCHICHTEN, AUF BASIS EINER, MIT KRISTALLINEN NANOTEILCHEN HERGESTELLTEN TRÄGERSCHICHT**
FUNCTIONAL CERAMIC LAYERS BASED ON A SUPPORT LAYER PRODUCED WITH CRYSTALLINE NANOPARTICLES
COUCHES CERAMIQUES FONCTIONNELLES COMPRENANT UNE COUCHE SUPPORT PRODUITE AU MOYEN DE NANOPARTICULES CRISTALLINES

(30) Priorität: 21.04.2001 DE 10119538
(43) Veröffentlichungstag der Anmeldung: 28.01.2004
(73) Patentinhaber: ItN Nanovation GmbH, 66117 Saarbrücken (DE)
(72) Erfinder: NONNINGER, Ralph, 66129 Saarbrücken (DE); BINKLE, Olaf, D-66459 Kirkel (DE)
(74) Vertreter: Kohler Schmid Möbus
(86) Internationale Anmeldenummer: PCT/DE2002/001453
(87) Internationale Veröffentlichungsnummer: WO 2002/086194

(56) Entgegenhaltungen:
- WO-A-99/50203
- JP-A- 5 131 149
- JP-A- 8 270 639
- US-A- 4 303 554
- US-A- 6 086 948
- M.C. CAROTTA, M. FERRONI, V. GUIDI, G. MARTINELLI: "Preparation and Characterization of Nanostructured Titania Thick Films" ADVANCED MATERIALS, Bd. 11, Nr. 11, 1999, Seiten 943-946, XP002234864 in der Anmeldung erwähnt

## Beschreibung

Die Erfindung betrifft ein Verfahren zur Herstellung von porösen keramischen Schichten auf metallischen, keramischen, emaillierten oder Glas-Substraten unter Verwendung von kristallinen Nanoteilchen mit Partikelgrößen zwischen 3 nm und 100 nm über einen nasschemischen Prozess, sowie die Funktionalisierung dieser porösen keramischen Schicht durch das Einbringen einer zweiten Komponente in die Poren dieser porösen keramischen Schicht.

Die Veredlung von Oberflächen ist bereits seit langer Zeit bekannt. Die Anfänge einer Vielzahl von innovativen Entwicklungen war dabei die Abscheidung von Edelmetallen wie Silber, Gold und Kupfer aus der Lösung auf feste Substrate. Seit dieser Zeit erscheint die Anwendungsbreite für Funktionsschichten nahezu grenzenlos zu sein, wobei im folgenden nur einige Beispiele beschrieben werden. Transparente leitfähige Schichten finden Anwendung von antistatischen und reflexminderten Beschichtungen über transparente Elektroden für elektrochrome Anwendungen bis hin zu Gassensoren und Solarzellen. Hydrophobe Beschichtungen werden genutzt zur Realisierung von Niederenergieoberflächen, die z.B. Schmutzablagerungen verhindern. Hinzu kommen Schichtsysteme mit speziellen tribologischen Eigenschaften, Antifingerprintschichten, katalytisch aktive Schichten, Korrosionsschutzschichten und vieles mehr.

Die Möglichkeiten der Auftragung solcher Schichten auf die zu veredelnden Substrate sind ebenso wie die Anwendungsbereiche vielfältig, wobei Gasphasenprozesse wie CVD (chemical vapor deposition), PVD (physical vapor deposition) und Sputterprozesse oder chemische Verfahren wie die Sol-Gel-Beschichtung dominierend sind. Während Gasphasen- und Sputterprozesse üblicherweise mit hohen Kosten verbunden und nicht für alle Geometrien anwendbar sind, liegen die Nachteile von Sol-Gel-Schichten darin, dass sie nur sehr dünn auftragbar (Schichtdicken üblicherweise um 100 nm) und nicht temperaturstabil sind. Aufgrund ihres Hybridnetzwerkes enthalten Sol-Gel-Schichten größere Anteile an organischen Komponenten, die bei einer Temperaturbehandlung oberhalb 300°C zerstört werden, womit die Sprödigkeit der Schicht ebenso zunimmt, wie die intrinsischen Spannungen, was zu einer Ablösung der Schicht führt.

Es hat nicht an Versuchen gefehlt, metallische, keramische, emaillierte oder Glas-Substrate nasschemisch mit einer keramischen Schicht zu versehen. Verwendet werden hierbei zunächst Suspensionen oder Pasten von keramischen Teilchen, die über, dem Fachmann bekannte, Formgebungsverfahren, wie z.B. Dip coating, Spin coating, Tauchen, Fluten, Sprühen, Foliengießen, Siebdruck etc. aufgebracht werden. In einem zweiten Schritt müssen diese Schichten auf dem Substrat verfestigt werden, womit einerseits eine Haftung an das Substrat, andererseits eine Verbindung der keramischen Teilchen untereinander erfolgen muss. Um dies zu erreichen, müssen hohe Temperaturen angewendet werden, da ein Sintern keramischer Teilchen nur über Diffusionsvorgänge möglich ist. Dabei gilt, dass die Sintertemperatur primär eine Materialkonstante darstellt, die nur von der Teilchengröße des verwendeten keramischen Materials abhängt.

Um keramische Schutzschichten auf metallischen, keramischen, emaillierten oder Glas-Substraten auszubilden, müssen diese vorzugsweise nahezu der theoretischen Dichte gesintert werden. Hierfür sind Temperaturen nötig, die im günstigsten, literaturbekannten Fall bei 1400°C lfür z.B. sub-µm Zirkonoxyd oder bei 1300°C für z.B. sub-µm Aluminiumoxyd liegen. Selbst zur Darstellung poröser Schichten werden hohe Temperaturen benötigt, da sub-µm Zirkonoxyd erst ab 1000°C oder sub-µm Aluminiumoxyd erst ab 900°C beginnt, sich zu verfestigen. Diese Temperaturen sind jedoch für die zu veredelnden Substratwerkstoffe wie Metalle, Gläser oder Email in aller Regel zu hoch, da Gläser und Email aufschmelzen und Metalle ihre mechanischen Eigenschaften verlieren.

Die Verdichtung einer keramischen Schicht auf einem vorgegebenen Substrat muss somit bei deutlich niedrigeren Temperaturen erfolgen, als zur Zeit im Stand der Technik praktiziert wird. Dies bedeutet zwangsläufig ein Reduzieren der eingesetzten Teilchengröße der keramischen Ausgangspulver, da über die dann zur Verfügung stehende größere Oberfläche die Diffusion der Teilchen beim Sinterprozess begünstigt wird, wodurch wiederum die Sintertemperatur der eingesetzten keramischen Teilchen reduziert wird. Um germaische Schichten auf metallischen, keramischen, emaillierten oder Glas-Substraten auszubilden, muss die Primärteilchengröße der eingesetzten keramischen Pulver unterhalb 200 nm, bevorzugt unterhalb 100 nm und, besonders bevorzugt, unterhalb 50 nm liegen. Weiterhin muss der Anteil an keramischen Teilchen gegenüber dem organischen Binderanteil in der Schicht hoch sein, da nur so ein ausreichender Kontakt zwischen den Partikeln möglich ist, was die Grundvoraussetzung für den Sinterprozess darstellt. Dies bedeutet, dass der Feststoffgehalt einer nicht gebrannten keramischen Schicht aus Nanoteilchen auf einem vorgegebenen Substrat > 40 Vol.-%, bevorzugt > 35 Vol.-% und, besonders bevorzugt, > 40 Vol.-% betragen muss.

Diese Forderung geht weit über den Stand der Technik hinaus. Die Schwierigkeit liegt in der Verarbeitung von Naoteilchen begründet. Bei Teilchen mit ca. 10 nm Teilchengröße erhöht sich die spezifische Pulveroberfläche auf bis zu 250 m²/g. Damit verbunden, muss der Anteil an organischen Bindern drastisch erhöht werden, da die große vorhandene Oberfläche organische Prozesshilfemittel bindet, die dann nicht mehr für die Einstellung der Rheologie zur Verfügung stehen. Dies wiederum führt zu sehr kleinen Feststoffgehalten in den z.B. gesprühten keramischen Schichten, wodurch der lineare Schrumpf ebenso wie die Spannungen in der Schicht beim Sintern so groß werden, dass die Schicht reißt und sich ablöst. Hinzu kommt, dass kommerziell verfügbare Nanoteilchen oft agglomeriert sind (Grundvoraussetzung für die Realisierung defektfreier Schichten aus Nanoteilchen ist, dass die Nanoteilchen isoliert voneinander vorliegen) oder nur als Vorstufen keramischer Teilchen angeboten werden. Ein Beispiel für diese kommerziell zur Verfügung stehenden Vorstufen ist nanoskaliger Böhmit (AIO(OH)), der bei Sintern zunächst noch unter Wasserabgabe verdichtet, was ebenfalls zu einem Ablösen der Schicht führt.

In der Literatur finden sich nur wenige Hinweise für die Verarbeitung von Nanoteilchen zu keramischen Schichten, da immer die Schwierigkeit besteht, für das Sintern ausreichend hohe Feststoffgehalte zu realisieren. Noch am weitesten verbreitet sind die Versuche, Nanoteilchen mittels Siebdruck zu Schichten zu verarbeiten. Carotta et al. [Adv. Mater. 1999, 11 No.11] stellen Versätze aus nanoskaligem Titandioxyd her mit maximalen Füllstoffgehalten von 5,4 Vo.-%. Das beste literaturbekannte Ergebnis für eine keramische Masse aus nanoskaligen Teilchen, die mittels Siebdruck verarbeitet wurde, lag bei einem Feststoffgehalt von 17 Vol.-% (55 Gew.-%). Mit all diesen Versätzen ist es unmöglich, keramische Schichten auf metallischen, keramischen, emaillierten oder Glas-Substraten zu fertigen.

Die Aufgabe der vorliegenden Erfindung ist es, einen keramischen Versatz auf Basis nanoskaliger Teilchen und ein Verfahren zu seiner Herstellung bereitzustellen, bei dem der Feststoffgehalt der Nanoteilchen, also der Pulvergehalt im Versatz, so hoch ist, dass sich mittels bekannter nasschemischer Formgebungsverfahren wie Spin coating, Dip coating, Tauchen, Sprühen, Siebdruck oder Foliengießen mit nachträglichem Laminieren, keramische Schichten auf metallischen, keramischen, emaillierten oder Glas-Substraten herstellen lassen, die sich porös verdichten lassen, wobei die porösen keramischen Schichten eine hohe innere Oberfläche aufweisen sollen, so dass sie sich durch die Zugabe einer zweiten Komponente funktionalisieren lassen.

Diese Aufgabe wird durch einen keramischen Versatz gelöst, wie es durch die Verfahrensschritte von Patentanspruch 1 gekennzeichnet ist.

Auf diese Weise gelingt es, ausreichend hohe Pulvergehalte im Versatz zu realisieren, so dass sich die applizierten keramischen Schichten bereits bei niedrigen Temperaturen (je nach Anwendungsfall zwischen 400 und 1200°C) auf dem jeweiligen Substrat (bevorzugt Metall, Email, Glas, Keramik) zu einer porösen Schicht verdichten lassen. Durch die Verwendung der oberflächenaktiven Oxycarbonsäure lassen sich sehr homogene Versätze realisieren, bei denen die Nanoteilchen auf Primärteilchengröße dispergiert vorliegen, so dass literaturbekannte Probleme wie z.B. Entmischungen nicht auftreten.

Das eingesetzte keramische Pulver ist ein nanoskaliges, keramikbildendes Pulver. Dabei handelt es sich insbesondere um ein nanoskaliges Chalkogenid-, Carbid- oder Nitridpulver. Bei den Chalkogenidpulvern kann es sich um ein Oxid-, Sulfid-, Selenidoder Telluriedpulver handeln. Nanoskalige Oxidpulver sind bevorzugt. Es können alle Pulver eingesetzt werden, die üblicherweise für das Pulversintern verwendet werden. Beispiele sind (gegebenenfalls hydratisierte) Oxide wie ZnO, CeO₂, SnO₂, Al₂O₃, CdO, SiO₂, TiO₂, In₂O₃, ZrO₂, Yttrium stabilisiertes ZrO₂, Al₂O₃, La₂O₃, Fe₂O₃, F₃O₄, Cu₂O, Ta₂O₅, Nb₂O₅, V₂O₅, MoO₃ oder WO₃, aber auch Phosphate, Silikate, Zirkonate, Aluminate und Stannate, Sulfide wie CdS, ZnS, PbS und Ag₂S, Selenide wie GaSe, CdSe und ZnSe, Tellunide wie ZnTe oder CdTe, Carbide wie VC, CdC₂ oder SiC, Nitride wie BN, AIN, Si₃N₄ und Ti₃N₄, entsprechende Mischoxide wie Metall-Zinn-Oxide, z.B. Indium-Zinn-Oxid (ITO), Antimon-Zinn-Oxid, Fluor-dotiertes Zinnoxid und Zn-dotiertes Al₂O₃, Leuchtpigmente mit Y- oder Eu-haltigen Verbindungen, oder Mischoxide mit Perowskitstruktur wie BaTiO₃ und Bleizirkontitanat (PZT). Weiterhin können auch Mischungen der angegebenen Pulverteilchen eingesetzt werden.

Der erfindungsmäßige Versatz enthält bevorzugt nanoskalige Teilchen, bei denen es sich um ein Oxid, Oxidhydrat, Chalkogenid, Nitrid oder Carbid von Si, Al, B, Zn, Zr, Cd, Ti, Ce, Sn, In, La, Fe, Cu, Ta, Nb, V, Mo oder W, besonders bevorzugt von Si, Zr, Al, B, W und Ti handelt. Besonders bevorzugt werden Oxide eingesetzt. Bevorzugte nanoskalige anorganische Feststoffteilchen sind Aluminiumoxid, Böhmit, Zirkonoxid, Yttrium, stabilisiertes Zirkonoxyd, Eisenoxyd und Titandioxid.

Die im Versatz enthaltenen anorganischen Teilchen besitzen im allgemeinen eine durchschnittliche Primärteilchengröße im Bereich von 1 bis 100 nm, vorzugsweise 5 bis 50 nm und besonders bevorzugt 5 bis 20 nm. Die Primärteilchen können auch in agglomerierter Form vorliegen, bevorzugt liegen sie nicht agglomeriert bzw. im wesentlichen nicht agglomeriert vor.

Zum Zwecke der Schichtausbildung wird das Ausgangspulver mit einem organischen Binder vermischt, der für die notwendige Plastifizierung der Mischung sorgt. Der erfindungsgemäße keramische Versatz enthält mindestens einen polymeren Binder, mindestens eine Oxycarbonsäure und mindestens ein Lösungsmittel.

Als polymeren Binder kann jedes thermoplastische Polymer verwendet werden. Beispiele für einsetzbare thermoplastische Polymere sind Polyolefine, wie Polyethylen, Dialkylphthalate (Dimethylphthalat, Diethylphthalat, Dipropylphthalat und Dibultylphthalat), Polypropylen und Poly-1-buten, Polymethyl-(meth)acrylat, Polyacrylnitril, Polystyrol und Polyvinylalkohol, Polyamide, Polyester, Polyacetate, Polycarbonate, lineare Polyurethane und entsprechende Copolymere, wie EthylenVinylacetat (EVA)-Copolymere, sowie Biopolymere wie Cellulose, Methylcellulose, Ethylcellulose, Propylcellulose, Carboxy-modifizierte Cellulose, Ambergum u.a., wobei Polyvinylalkehole (PVA), Polyvinylpyrolidone (PVP), Polyacrylate, Polymethacrylate bevorzugt sind. Es kann ein thermoplastisches Polymer eingesetzt werden oder eine Mischung von zwei oder mehreren thermoplastischen Polymeren.

In einer besonderen Ausführungsform des Verfahrens werden als Polymerkomponente Acrylate und Methacrylate verwendet, die unter Verwendung eines Radikalstarters nach der Formgebung, mittels z.B. UV-Bestrahlung oder thermisch, vernetzt werden und so die innerhalb des erfindungsgemäßen Versatzes notwendige polymere Komponente erst aufbauen. Hier eignen sich alle im Handel befindlichen Acrylat- und Methacrylatverbindungen, bevorzugt aber die von der BASF vertriebenen Lucirin-Marken und die Laromer-Marken, wie LR8765, ES81, LR8713, LR8986, PE55F, PE56F, LR8793, LR8846, LR9004, LR8799, LR8800, LR8907, LR8981, LR8992, PE55W, LR8895, LR8949, LR8983, LR8739, LR8987, LR8748, LR8863, LR8945, LR8967, LR8982, LR8812, LR8894, LR8997, LR8864, LR8889, LR8869, LR8996, LR8946, LR8899, LR8985.

Als Radikalstarter können alle, dem Fachmann bekannten Radialstarter, genutzt werden. Dieses Verfahren eignet sich insbesondere, wenn als keramisches Formgebungsverfahren der Siebdruck eingesetzt wird und über eine Maskentechnik eine gezielte Strukturierung erzielt werden soll.

Um die erforderliche Kompatibilität zwischen den keramischen Teilchen und der polymeren Matrix herzustellen, werden grenzflächenaktive Moleküle eingesetzt. Diese Moleküle müssen einen bifunktionellen Aufbau besitzen, so dass sich ein Teil des Moleküls an die Teilchenoberfläche anbinden lässt und ein anderer Teil des Moleküls die Kompatibilität zur Matrix realisiert. Hier eignen sich speziell bifunktionelle Moleküle aus der Klasse der Carbonsäuren, der Carbonsäureamide, der Carbonsäureester, der Carbonsäurechloride, der β-Diketone, der Alkylsilane und insbesondere der Oxycarbonsäuren. In der erfindungsgemäßen Ausführungsform des Verfahrens wird als Oxycarbonsäure die Trioxadecansäure und die Dioctaheptansäure verwendet.

Als weitere Komponente des keramischen Versatzes enthält dieser ein organisches Lösungsmittel oder ein Gemisch von zwei oder mehreren organischen Lösungsmitteln, bevorzugt aus der Gruppe der Alkylenglykolen insbesondere Ethylenglycol, Propylenglykol, Diethylenglykolmonobutylether, Diethylenglykolmonoallylether, Diethylenglykolmonohexylether, Diethylenglycolmonodecylether, Diethylenglycolmonoethylether und strkturell ähnliche Moleküle eingesetzt werden können. In einer bevorzugten Ausführungsform wird ein Alkoholgemisch aus Ethylenglykol und Diethylenglykolmonobutylether eingesetzt. In einer besonders bevorzugten Ausführungsform wird als Lösungsmittel Wasser eingesetzt.

Die nanoskaligen Pulver werden mit den Polymeren, der Oxycarbonsäure und dem Lösungsmittel bzw. Lösungsmittelgemisch vermischt und über Spin-Coating, Dip-Coating, Tauchen, Fluten oder Sprühen auf das gewünschte Substrat aufgebracht, getrocknet, entbindert und anschließend zu einer defektfreien, porösen keramischen Schicht verdichtet. Die so hergestellte Schicht kann mit einem Stoff getränkt, d.h. gefüllt werden, der der porösen Schicht eine neue Funktionalität verleiht.

In einer speziellen Ausführungsform der Erfindung werden die Schichten nahezu ihrer theoretischen Dichte gesintert.

Mit Hilfe des erfindungsgemäßen keramischen Versatzes lassen sich keramische Schichten auf Metall, Glas-, Email- oder Keramik herstellen, mit Schichtdicken zwischen 100 nm und 10 µm. Die Schichten sind transparent und völlig flexibel. Auf einem 0,5 nm Stahlblech lassen sich die Schichten bis zu einem Winkel von 160° biegen und zurückbiegen, ohne dass die Schicht reißt oder abplatzt. Dies geht weit über den derzeitigen Stand der Technik, bezüglich der Flexibilität keramischer Schichten hinaus. Die erfindungsgemäßen keramischen Schichten lassen sich somit porös herstellen. Sowohl eine dichte als auch eine poröse keramische Schicht gewährleistet für das beschichtete Substrat eine verbesserte Chemikalienresistenz, eine verbesserte Kratzfestigkeit sowie eine erhöhte Temperaturbeständigkeit. Die poröse keramische Schicht besitzt darüber hinaus eine sehr große innere Oberfläche, die mit einer zweiten Komponente gefüllt werden kann, um die poröse keramische Schicht zu funktionalisieren. Die porösen keramischen Schichten können mit hydrophobierenden, hydrophilierenden, schmutzabweisenden und korrosionshemmenden Stoffen gefüllt werden, die im Substrat verbleiben bzw. bei Bedarf nachgeliefert werden können oder aber mit bakteriziden Stoffen, Duftstoffen, Parfüms oder Inhalationsstoffen beladen werden, die gezielt dosiert an die Raumluft abgegeben werden.

In einer besonderen Ausführungsform der Erfindung besitzt die poröse keramische Schicht eine fraktale Oberflächenrauhigkeit, die zu einer Nichtbenetzung von Wassertropfen und Öltropfen führt. Die Prozessparameter werden so gewählt, dass die Porosität eine fraktale Struktur aufweist. Die sich daraus ergebende Oberflächenstruktur ist wasserabweisend, so dass die keramische Schicht selbstreinigend wirkt.

Bei einer fraktalen Struktur sind an der Oberfläche die offenen Poren gleichmäßig verteilt oder unterschiedlich große offene Poren sind gleichmäßig über der Oberfläche verteilt.

Werden die erfindungsgemäßen keramischen Schichten transparent ausgebildet, so eignen sie sich für optische Produkte.

Ist die poröse Schicht mit einem Stoff gefüllt, so kann dieser Stoff an die Oberfläche der keramischen Schicht wandern und in einer Art Depotfunktion Störungen der eingestellten Schichtfunktion (z.B. schmutzabweisend) beheben.

Die Erfindung betrifft ein Verfahren zur Herstellung von porösen keramischen Schichten auf metallischen, keramischen, emaillierten oder Glas-Substraten unter Verwendung von kristallinen Nanoteilchen mit Partikelgrößen zwischen 3 nm und 100 nm über einen nasschemischen Prozess, sowie die Funktionalisierung dieser porösen keramischen Schicht durch das Einbringen einer zweiten Komponente in die Poren der als Trägerschicht dienenden porösen keramischen Schicht.

Die porösen keramischen Schichten können mit hydrophobierenden, hydrophilierenden, schmutzabweisenden und korrosionshemmenden Stoffen gefüllt werden, die im Substrat verbleiben bzw. bei Bedarf nachgeliefert werden oder aber mit bakteriziden Stoffen, Duftstoffen, Parfüms oder Inhalationsstoffen beladen werden, die gezielt dosiert an die Raumluft abgegeben werden.

Die folgenden Beispiele erläutern die Erfindung, ohne sie einzuschränken

### Beispiel 1

30 g nanoskaliges, yttriumstabilisiertes Zirkondioxyd (Primärteilchengröße 10 nm) werden mit einer in Wasser verdünnten Oxycarbonsäure versetzt. Zu dieser Suspension werden 4,5 g Polyvinylalkohol gegeben und die Suspension homogenisiert. Die transparente bis transluzente Lösung wird mittels Tauchbeschichtung auf ein 10 x 10 cm langes Stahlsubstrat (1,4511 oder 1,4301) aufgebracht und bei 80°C im Trockenschrank getrocknet. Danach wird das beschichtete Stahlsubstrat 1 eine Stunde bei 500°C gehalten. Die Aufheizrate betrug 5 K/min. Es bildete sich eine poröse keramische Schicht aus.

### Beispiel 2

Analog Beispiel 1 wird ein Stahlsubstrat mit einer porösen keramischen Schicht versehen. Danach wird die Schicht mit einem kommerziell erhältlichen Fluorsilan, das vorhydrolisiert wurde, imprägniert und bei 150°C verfestigt. Es entsteht eine Wasser und Öl abweisende, kratzfeste Schicht.

### Beispiel 3

30 g nanoskaliges, yttriumstabilisiertes Zirkondioxyd (Primärteilchengröße 10 nm) werden mit einer in Ethylenglycol verdünnten Oxycarbonsäure vorgelegt. Zu dieser Suspension wird ein Acrylatbinder (Laromer BASF) sowie ein Radikalstarter gegeben und die Suspension unter Rühren homogenisiert. Die transparente bis transluzente Lösung wird auf ein 10 x 10 cm langes Stahlsubstrat (1,4511 oder 1,4301) aufgetragen und mittels UV-Licht gehärtet. Die Schicht wird eine Stunde bei 500°C verdichtet.

Die Erfindung betrifft ein Verfahren zur Herstellung von porösen keramischen Schichten auf metallischen, keramischen, emaillierten oder Glas-Substraten unter Verwendung von kristallinen Nanoteilchen mit Partikelgrößen zwischen 3 nm und 100 nm über einen nasschemischen Prozess, sowie die Funktionalisierung dieser porösen keramischen Schicht durch das Einbringen einer zweiten Komponente in die Poren der als Trägerschicht dienenden porösen keramischen Schicht.

Die porösen keramischen Schichten können mit hydrophobierenden, hydrophilierenden, schmutzabweisenden und korrosionshemmenden Stoffen gefüllt werden, die im Substrat verbleiben bzw. bei Bedarf nachgeliefert werden oder aber mit bakteriziden Stoffen, Duftstoffen, Parfüms oder Inhalationsstoffen beladen werden, die gezielt dosiert an die Raumluft abgegeben werden.

## Patentansprüche

1. Verfahren zur Herstellung von porösen keramischen Schichten auf metallischen, keramischen, emaillierten oder Glas-Substraten, wobei
a) ein Oxid-, Carbid-, Nitrid- oder Sulfidpulver aus Teilchen einer Größe im Bereich von 3 bis 100 nm besteht, die mit einer Oxycarbonsäure umgesetzt werden und mit
b) einer Mischung von mindestens einem Lösungsmittel und mindestens einem polymeren Binder oder einer Kombination aus Monomer und Radikalstarter vermischt werden, wobei
c) die Mischung aus a) und b) einen Feststoffgehalt aus Nanoteilchen von > 30 Vol.-% aufweist und über Dip-Coating, Spin-Coating, Tauchen, Fluten, Sprühen, Siebdruck oder Foliengießen auf das Substrat aufgebracht, getrocknet und zu einer porösen Schicht verfestigt wird.

2. Verfahren nach Anspruch 1, **dadurch gekennzeichnet, dass** die poröse Schicht mit einem Stoff gefüllt wird oder eine fraktale Struktur aufweist, die über die Wahl der Porzessparameter eingestellt wird.

3. Verfahren nach Anspruch 1 oder 2, **dadurch gekennzeichnet, dass** der Feststoffgehalt der Nanoteilchen in der applizierten Schicht vor dem Brand mindestens > 35 Vol.-% und, besonders bevorzugt, > 40 Vol.-% beträgt.

4. Verfahren nach einem der Ansprüche 1 bis 3, **dadurch gekennzeichnet, dass** die keramische Schicht flexibel ausgebildet wird und Biegungen > 90°, bevorzugt > 120°, unbeschadet übersteht.

5. Verfahren nach einem der Ansprüche 1 bis 4, **dadurch gekennzeichnet, dass** die poröse keramische Schicht nahezu der theoretischen Dichte gesintert wird.

6. Verfahren nach einem der Ansprüche 1 bis 5, **dadurch gekennzeichnet, dass** die keramischen Schichten transparent ausgebildet werden.

7. Verfahren nach einem der Ansprüche 1 bis 6, **dadurch gekennzeichnet, dass** die poröse keramische Schicht mit hydrophobierenden, hydrophilierenden, schmutzabweisenden und korrosionshemmenden Stoffen wie auch mit bakteriziden Stoffen, Duftstoffen, Parfüms oder Arzneimitteln und Inhalationsstoffen gefüllt wird.

8. Verfahren nach Anspruch 7, **dadurch gekennzeichnet, dass** die Stoffe in den Poren der keramischen Schicht bei Bedarf an die Oberfläche der keramischen Schicht wandern.

9. Verwendung der porösen keramischen Schichten hergestellt durch den Prozeß nach einem der Ansprüche 1 bis 8 als Korrosionsschutzschichten und tribologische Schichten.

10. Verwendung der porösen keramischen Schichten hergestellt durch den Prozeß nach einem der Ansprüche 1 bis 8 als selbstreinigende bzw. easy-to-clean-Schichten.

11. Verwendung der porösen keramischen Schichten hergestellt durch den Prozeß nach einem der Ansprüche 1 bis 8 als Arzneimittelträger, bevorzugt in medizinischen Geräten.

12. Verwendung der porösen keramischen Schicht hergestellt durch den Prozeß nach Anspruch 1, aufgebracht auf ein keramisches Substrat als keramischer Filter.

## Revendications

1. Procédé de fabrication de couches de céramique poreuse sur des substrats métalliques, céramiques, émaillés ou de verre, dans lequel
a) une poudre d'oxyde, de carbure, de nitrure ou de sulfure constituée de particules d'une taille se situant dans la fourchette de 3 à 100 nm, est mélangée à de l'acide oxycarboxylique, lequel produit résultant
b) est mélangé à un mélange d'au moins un solvant et d'au moins un liant polymère ou une combinaison de monomère et d'amorceur de radical, dans lequel
c) le mélange de a) et de b) a une teneur en matière solide de nanoparticules > 30 % Vol. et est appliqué sur le substrat par Dip-Coating, Spin-Coating, immersion, remplissage, pulvérisation, sérigraphie ou par coulage en feuille mince, et est ensuite séché et solidifié en une couche poreuse.

2. Procédé selon la revendication 1, **caractérisé en ce que** la couche poreuse est remplie d'une substance ou présente une structure fractale déterminée par le choix des paramètres du procédé.

3. Procédé selon la revendication 1 ou 2, **caractérisé en ce que** la teneur en matière solide des nanoparticules dans la couche appliquée avant la cuisson est au moins > 35 %-Vol et dans un mode de réalisation particulièrement préférentiel > 40 % Vol.

4. Procédé selon l'une quelconque des revendications 1 à 3, **caractérisé en ce que** la couche de céramique est flexible et résiste à des flexions > 90°, de préférence > 120° sans être endommagée.

5. Procédé selon l'une quelconque des revendications 1 à 4, **caractérisé en ce que** la couche de céramique poreuse est vitrifiée avec une densité proche de la densité théorique.

6. Procédé selon l'une quelconque des revendications 1 à 5, **caractérisé en ce que** les couches de céramique sont transparentes.

7. Procédé selon l'une quelconque des revendications 1 à 6, **caractérisé en ce que** la couche en céramique poreuse contient des substances hydrophobes, hydrophiles, résistantes aux salissures et à la corrosion ainsi que des substances bactéricides, odoriférantes, des parfums ou des substances médicamenteuses et d'inhalation.

8. Procédé selon la revendication 7, **caractérisé en ce que** les substances dans les pores de la couche de céramique migrent sur demande à la surface de la couche en céramique.

9. Utilisation des couches en céramique poreuses fabriquées par le procédé selon l'une quelconque des revendications 1 à 8 en tant que couches de protection contre la corrosion et couches tribologiques.

10. Utilisation des couches de céramique poreuses fabriquées par le procédé selon l'une quelconque des revendications 1 à 8 en tant que couches autonettoyantes ou faciles à nettoyer

11. Utilisation des couches de céramique poreuses fabriquées par le procédé selon l'une quelconque des revendications 1 à 8 en tant que support de produits pharmaceutiques, de préférence dans les appareils médicaux.

12. Utilisation de la couche de céramique poreuse fabriquée par le procédé selon la revendication 1, disposée sur un substrat en céramique en tant que filtre en céramique.

## Claims

1. Method for producing porous ceramic layers on metallic, ceramic, enamelled or glass substrates, wherein
a) an oxide, carbide, nitride or sulfide powder consists of particles of a size in the region between 3 and 100nm, which are converted with an oxycarboxylic acid, and
b) which are mixed with a mixture of at least one solvent and at least one polymeric binder or a combination of monomer and radical starter, wherein
c) the mixture of a) and b) has a solid content of nanoparticles of >30 percent per volume and is applied onto the substrate by dip-coating, spin-coating, immersion, flooding, spraying, screen printing or film casting, is dried and solidified in to a porous layer.

2. Method according to claim 1, **characterized in that** the porous layer is filled with a substance or has a fractal structure which is set through selection of the process parameters.

3. Method according to claim 1 or 2, **characterized in that** the solid content of the nanoparticles in the applied layer before burning is at least >35 percent by volume and particularly preferred >40 percent by volume.

4. Method according to any one of the claims 1 through 3, **characterized in that** the ceramic layer is flexible and withstands bending of >90°, preferably >120° without being damaged.

5. Method according to any one of the claims 1 through 4, **characterized in that** the porous ceramic layer is sintered close to the theoretical density.

6. Method according to any one of the claims 1 through 5, **characterized in that** the ceramic layers are transparent.

7. Method according to any one of the claims 1 through 6, **characterized in that** the porous ceramic layer is filled with hydrophobizing, hydrophilizing, dirt-repellent and corrosion-inhibiting substances and with bactericidal substances, aromatics, perfumes or medicine and inhalation substances.

8. Method according to claim 7, **characterized in that** the substances in the pores of the ceramic layer migrate to the surface of the ceramic layer when required.

9. Use of porous ceramic layers produced by the process according to any one of the claims 1 through 8 as corrosion protection layers and tribological layers.

10. Use of porous ceramic layers produced by the process according to any one of the claims 1 through 8 as self-cleaning or easy-to-clean layers.

11. Use of porous ceramic layers produced by the process according to any one of the claims 1 through 8 as carrier of medicine, preferably in medical devices.

12. Use of porous ceramic layer produced by the process according to claim 1, disposed onto a ceramic substrate as ceramic filter.
